(19) Europäisches Patentamt
European Patent Office
Office européen des brevets

(11) **EP 2 270 914 B1**

(12) **FASCICULE DE BREVET EUROPEEN**

(45) Date de publication et mention
de la délivrance du brevet:
**28.09.2011  Bulletin 2011/39**

(51) Int Cl.:
*H01M 8/06* *(2006.01)*   *H01M 8/10* *(2006.01)*
*H01M 8/12* *(2006.01)*

(21) Numéro de dépôt: **10165378.0**

(22) Date de dépôt: **09.06.2010**

(54) **Pile à combustible à membrane de purification d'hydrogène integrée**

Brennstoffzelle mit integrierter Wasserstoffreinigungsmembran

Fuel cell with built-in hydrogen purification membrane

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **11.06.2009  FR 0953861**

(43) Date de publication de la demande:
**05.01.2011  Bulletin 2011/01**

(73) Titulaire: **Electricité de France**
**75008 Paris (FR)**

(72) Inventeurs:
• **Marrony, Mathieu**
**67500 HAGUENAU (FR)**
• **Aslanides, Antoine**
**San Francisco, CA 94117 (US)**

(74) Mandataire: **Cabinet Plasseraud et al**
**52, rue de la Victoire**
**75440 Paris Cedex 09 (FR)**

(56) Documents cités:
**WO-A1-2006/067156      WO-A1-2008/043943
DE-T5-112006 002 669    US-A1- 2003 170 520
US-A1- 2004 071 894**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne une pile à combustible à électrolyte solide comprenant une membrane céramique de purification d'hydrogène incorporée dans la pile en tant que support mécanique en contact direct avec l'anode. L'invention concerne également un procédé de fabrication d'une telle pile ainsi que l'utilisation de celle-ci pour la production d'énergie électrique.

Les piles à combustible représentent à l'heure actuelle une des technologies les plus prometteuses susceptibles de concurrencer à moyen terme les autres systèmes de production d'énergie. Une pile à combustible est un dispositif électrochimique permettant de transformer de l'énergie chimique contenue dans un combustible, tel que l'hydrogène, en énergie électrique et accessoirement en chaleur. Actuellement, les deux principales technologies de piles à combustible sont les piles à oxyde solide (en anglais *solid oxide fuel cell*, SOFC) et les piles à membrane échangeuse de protons (en anglais *proton exchange membrane fuel cell*, PEMFC).

Les SOFC sont potentiellement plus intéressantes que les PEMFC de par leur rendement énergétique élevé qui est généralement de l'ordre de 50 à 70 %. Cependant, elles nécessitent des températures de fonctionnement élevées, de l'ordre de 750 à 1000°C, ce qui impose l'emploi de matériaux d'électrolyte et d'interconnecteurs en céramique généralement très coûteux. Par ailleurs, une température de fonctionnement aussi élevée induit une perte de stabilité à long terme par diffusion des éléments constituant l'électrolyte et les électrodes au niveau des interfaces entre ces constituants (interface anode/électrolyte et cathode électrolyte).

Les PEMFC fonctionnent à basse température. L'électrolyte solide est ici un polymère organique hydraté conducteur de protons dont la conductivité est intimement liée au degré d'hydratation. La nécessaire présence d'eau limite la température de fonctionnement de ce type de cellule à combustible à des températures inférieures à 100 °C. Le principal inconvénient des PEMFC est leur rendement électrique médiocre qui ne dépasse généralement pas 30 à 50 %.

Plus récemment ont été développés des piles à combustible à électrolyte solide céramique à conducteur de protons (PCFC, de l'anglais *protonic ceramic fuel cell*) qui fonctionnent à des températures intermédiaires, comprises entre environ 300 et 800°C. Ces températures permettent l'utilisation de matériaux métalliques, et en particulier de connecteurs métalliques, à la place des coûteux matériaux céramiques, indispensables pour les SOFC. Les PCFC présentent de meilleurs rendements électriques que les PEMFC et les températures de fonctionnement intermédiaires permettent une bonne utilisation de la chaleur dégagée.

L'amélioration des PCFC, comme celle des SOFC, passe par la diminution de l'épaisseur de l'électrolyte céramique. En effet, le rendement énergétique d'une pile est en partie gouverné par la résistance spécifique (ASR, de l'anglais *area specific resistance*) de l'électrolyte. Cette résistance spécifique est exprimée par la formule suivante :

$$ASR = (r*e)/A,$$

où r désigne la résistivité de l'électrolyte, e son épaisseur et A sa surface. Or, la résistivité de l'électrolyte décroit fortement avec la température. Autrement dit, plus la température de fonctionnement des PCFC est basse, plus l'épaisseur de l'électrolyte devra être faible pour l'obtention d'un rendement énergétique équivalent de la pile.

Une faible épaisseur des électrolytes solides interdirait toutefois, lors de la fabrication de la pile, d'utiliser cette couche de la pile en tant que support mécanique pour le dépôt des électrodes.

Dans le domaine des SOFC, deux solutions à ce problème ont été envisagées et expérimentées :

- utilisation de l'anode en tant que support mécanique pour le dépôt des autres couches (électrolyte et cathode) : cette approche souffre principalement du coût élevé des matériaux formant l'anode ;
- utilisation d'un support métallique sur lequel sont déposés successivement les autres constituants de la pile : bien que cette approche présente de nombreux avantages (bonne répartition de la chaleur, faible coût, bonne résistance aux variations de température, facilité de soudage) elle pose le problème du dépôt des couches céramiques (anode, cathode, électrolyte) sans frittage à haute température (1400 °C).

La Demanderesse, dans le cadre de ses recherches visant à améliorer les piles à combustible à électrolyte solide fonctionnant à des températures inférieures à celles des SOFC, plutôt que de transposer les solutions pas tout à fait satisfaisantes décrites ci-dessus au domaine des PCFC et PEMFC, propose une troisième solution qui, non seulement ne présente pas les inconvénients des deux premières, mais apporte un avantage supplémentaire particulièrement intéressant dans le domaine des températures de fonctionnement des piles à combustible envisagé.

La Demanderesse a en effet fabriqué des piles à combustible à électrolyte solide conducteur protonique en utilisant, en tant que support mécanique pour le dépôt des couches successives de la pile (anode, électrolyte solide, cathode) une membrane céramique nanoporeuse présentant une sélectivité pour l'hydrogène. Une telle membrane céramique dont l'épaisseur ne dépasse généralement pas quelques centaines de micromètres, présente avantageusement à la fois

- une résistance mécanique suffisante pour le dépôt des matériaux formant l'anode, l'électrolyte solide et la cathode,

- une résistance thermique permettant le frittage à haute températures de ces dépôts, et
- une bonne sélectivité pour l'hydrogène qui permet l'utilisation d'un combustible gazeux de moindre pureté.

Bien que l'utilisation d'une telle membrane céramique de purification d'hydrogène soit particulièrement utile dans le domaine des PCFC, elle présente également un intérêt non négligeable dans le domaine des PEMFC où la présence d'impuretés telles que le monoxyde de carbone ou le dioxyde de carbone, dans le combustible gazeux est particulièrement gênante. En effet, dans les PEMFC, le monoxyde de carbone réagit avec les sites catalytiques de platine de l'anode, ce qui diminue la surface active de celle-ci et donc les performances électriques. Le $CO_2$, en tant que gaz non réactif, dilue le combustible (hydrogène) et diminue ainsi la vitesse de diffusion de l'hydrogène sur les sites actifs de l'anode et par conséquent les performances de la cellule.

La présente invention a par conséquent pour objet une pile à combustible à électrolyte solide conducteur de protons, comprenant, un empilement des couches suivantes directement en contact les unes avec les autres :

(a) une membrane céramique de purification d'hydrogène ($H_2$) comprenant un support poreux à porosité ouverte, à base de spinelle alumino-magnésique, imprégné d'une couche de xérogel nanoporeuse à base de silice,

(b) une anode poreuse capable d'oxyder l'hydrogène ($H_2$),

(c) un électrolyte solide, organique ou céramique, conducteur ionique, de préférence conducteur de protons, et

(d) une cathode poreuse capable de réduire l'oxygène ($O_2$).

La membrane céramique nanoporeuse (couche (a)) est connue en tant que telle. Sa fabrication et ses caractéristiques ont été décrites dans la demande WO 2006/067156 au nom de la Demanderesse.

Cette membrane comprend un support poreux céramique constitué essentiellement de spinelle alumino-magnésique, c'est-à-dire contenant au moins 80 % en poids et de préférence au moins 90 % en poids de spinelle alumino-magnésique. Ce support poreux céramique présente de préférence un diamètre moyen des pores compris entre 0,95 et 1,05 μm. Ce diamètre moyen des pores est bien entendu celui de la porosité ouverte du support.

La porosité ouverte du support est comblée par un xérogel à base de silice. Ce xérogel a une structure nanoporeuse avec un diamètre moyen des pores avantageusement inférieur ou égal à 2 nm. C'est bien entendu le xérogel et non pas le support poreux qui détermine la sélectivité et la perméabilité à la membrane céramique (couche (a)) qui a donc une porosité ouverte avec un diamètre moyen des pores de préférence inférieur ou égal à 2 nm.

Le xérogel à base de silice peut remplir totalement la porosité ouverte du support poreux à base de spinelle alumino-magnésique. La présente invention englobe toutefois également les membranes dans lesquelles l'épaisseur de la couche de xérogel est inférieure à celle du support, autrement dit le xérogel peut remplir uniquement une couche superficielle plus ou moins profonde du support. Dans un mode de réalisation préféré, la couche de xérogel remplit de préférence la totalité de la porosité ouverte du support, c'est-à-dire l'épaisseur de la couche de xérogel est identique à celle du support et donc de la membrane céramique finale.

L'épaisseur de la membrane céramique imprégnée de xérogel (couche (a)), est de préférence comprise entre 100 μm et 500 μm, en particulier entre 200 μm et 300 μm et de manière particulièrement préférée entre 250 et 300 μm.

La membrane céramique nanoporeuse formant la couche (a) de la pile à combustible de la présente invention présente avantageusement une sélectivité ($H_2/CO$) supérieure ou égale à 2. Cette sélectivité augmente avec l'épaisseur de la couche de xérogel. Une augmentation de l'épaisseur de cette couche se traduira toutefois par une diminution de la perméabilité et l'homme du métier devra trouver, en fonction de l'application, le meilleur compromis entre sélectivité et perméabilité. On indiquera ici à titre d'exemple simplement qu'une couche de xérogel d'une épaisseur d'environ 100 μm présente une sélectivité ($H_2/CO$) proche de 2 et une perméabilité d'environ $10^{-4}$ mol.m$^{-2}$.s$^{-1}$.Pa$^{-1}$.

L'anode (couche (b)) est directement en contact avec la membrane céramique nanoporeuse et recouvre de préférence toute la surface ce celle-ci. L'hydrogène purifié par le passage à travers la membrane céramique nanoporeuse pénètre dans l'anode poreuse où il est oxydé en protons. L'anode peut en principe être constituée de n'importe quel matériau catalytique connu ou encore inconnu ayant une activité catalytique satisfaisante dans les conditions de fonctionnement envisagées (température, pression, pureté du combustible). On peut citer à titre d'exemple un cermet à base d'oxyde de nickel et de cérate de baryum dopé à l'yttrium.

Etant donné que l'anode ne remplit pas le rôle de support mécanique, la couche d'anode peut avoir une épaisseur de quelques micromètres seulement. La couche d'anode (couche (b)) présente avantageusement une épaisseur comprise entre 4 et 20 μm, de préférence entre 5 et 10 μm.

En contact direct avec la couche d'anode, la couche d'électrolyte solide conducteur ionique peut être soit de nature organique soit de nature céramique. Lorsque la pile à combustible de la présente invention est une pile de type PEMFC (températures de fonctionnement comprises entre 0 °C et 200 °C), l'électrolyte solide conducteur de protons est formé par un polymère organique hydraté. Il peut s'agir d'un polymère organique porteur de fonctions acides, en particulier de fonctions acide sulfonique, ou bien d'un polymère organique imprégné (« dopé ») d'une solution aqueuse d'acide, par exemple d'acide phosphorique. Le polymère organique porteur de fonctions acide peut être par exemple un copolymère fluoré porteur de groupes acide sulfonique (Nafion), un polysulfone aromatique à groupes sulfonate, du polybenzimidazole porteur de groupes sulfonate, un poly(éther éther cétone) (PEEK) sulfoné. Le polymère organique imprégné d'une solution d'acide est par exemple du polybenzylimidazole dopé à l'acide phosphorique. Cette couche d'électrolyte solide formée par un polymère conducteur organique a de préférence une épaisseur comprise entre 20 et 100 µm, en particulier entre 25 et 50 µm.

Lorsque la pile à combustible est de type PCFC (températures de fonctionnement comprises entre 300 et 700 °C), l'électrolyte solide conducteur de protons est formé par une céramique. Les céramiques conductrices de protons appartiennent notamment à la famille des pérovskites de formule $ABO_3$ où A = Ba ou Sr et B = Ce, Zr. Ces céramiques peuvent être dopées à l'yttrium (Y) ou l'ytterbium (Yb). Ces céramiques, particulièrement performantes en termes de tenue mécanique et de conductivité ionique, sont très sensibles à la présence de monoxyde et/ou de dioxyde de carbone et l'utilisation des membranes de purification d'hydrogène permet de manière avantageuse de protéger ces matériaux contre la carbonatation et de prolonger considérablement leur durée de vie.

L'électrolyte solide céramique peut en principe être présent sous forme d'une couche ayant une épaisseur de plusieurs centaines de micromètres. Toutefois, dans un souci d'optimiser le rendement électrique de la pile à combustible, l'épaisseur de la couche d'électrolyte solide céramique est de préférence inférieure à 100 µm, en particulier comprise entre 8 et 80 µm, et de manière particulièrement préférée comprise entre 10 et 50 µm.

On peut en principe utiliser pour la cathode n'importe quel matériau, connu ou encore inconnu, permettant de catalyser efficacement la réduction de l'oxygène moléculaire en ions $O2^-$ dans les conditions de fonctionnement de la pile. On peut citer à titre d'exemples de tels matériaux, les matériaux de structure pérovskite (i.e. présentant des lacunes en oxygène) tels que $LaNiO_{3-\delta}$, $La_{0,8}Sr_{0,2}Mn_{03-\delta}$, $La_{0,6}Sr_{0,4}Fe_{0,8}CO_{0,2}O_{3-d}$, $La_{0,6}Sr_{0,4}Fe_{0,8}Ni_{0,2}O_{3-d}$ et $Ba_{0,5}Sr_{0,5}C_{0,8}Fe_{0,2}O_{3-\delta}$, ou bien les matériaux de la famille Ruddlesden-Popper de structure $A_2MO_{4\pm d}$ (i.e. sur et/ou sous-stoechiométrique en oxygène) : $La_2NiO_{4+\delta}$, $Nd_2Ni0_{4+\delta}$, $Pr2NiO_{4+\delta}$, $LaSrNiO_{4+\delta}$ et $NdSrNiO_{4+\delta}$ peuvent être considérés pour les hautes températures de fonctionnement (300-700°C). Ces matériaux étant majoritairement conducteurs électroniques, les valeurs de leur conductivité électrique, de l'ordre de 100 S.cm$^{-1}$, correspondent en première approximation à la conductivité électronique des matériaux.

La cathode poreuse a avantageusement une épaisseur comprise entre 10 et 100 µm, de préférence comprise entre 20 et 50 µm.

Les piles à combustibles de la présente invention peuvent en principe avoir des géométries, configurations et conceptions très similaires à celles des SOFC. La principale différence par rapport aux SOFC (à électrolyte solide conducteur d'ions $O_2^-$) est que l'évacuation de l'eau produite par la combinaison des protons et des ions $O_2^-$ se fait au niveau de la cathode et non pas au niveau de l'anode, ce qui présente l'avantage de ne pas diluer le combustible gazeux par la vapeur d'eau produite.

Comme les SOFC, les piles de la présente invention peuvent être notamment de type « planaire » ou de type « tubulaire ». Lorsqu'elles sont de type planaire, les PCFC ou PEMFC de la présente invention sont formées d'un empilement de composants plats ayant des surfaces pouvant aller en général jusqu'à 500 cm$^2$. Lorsqu'elles sont de type tubulaire, les couches (a) à (d) sont des couches concentriques.

La technologie des cellules de type tubulaire est décrite par exemple dans l'article de L. Blum, W.A. Meulenberg, H. Nabielek et R. Steinberger-Wilckens, dans Int. J. Appl. Ceram. Technol., 2 [6] 482 - 492 (2005).

Dans le cas d'une cellule à géométrie tubulaire, la membrane céramique de purification d'hydrogène (couche (a)) est de préférence la couche intérieure entourant la lumière du tube et la cathode (couche (d)) est la couche la plus externe.

Grâce à l'utilisation de la membrane céramique nanoporeuse décrite ci-dessus en tant que support mécanique pour le dépôt des autres couches (b) à (d), les piles à combustible de la présente invention sont particulièrement faciles à fabriquer. En effet, les différentes couches peuvent être déposées aisément selon des techniques connues sur la membrane et compactées par frittage à haute température.

La présente invention a par conséquent également pour objet un procédé de fabrication d'une pile à combustible telle que décrite ci-dessus comprenant le dépôt des couches (b) à (d) sur une membrane céramique de purification d'hydrogène ($H_2$) formée par un support poreux à porosité ouverte, à base de spinelle alumino-magnésique, imprégné d'une couche de xérogel nanoporeuse à base de silice.

La première couche déposée est celle de l'anode. Le dépôt de cette couche peut se faire par extrusion ou technique sol-gel lorsque la pile a une structure tubulaire, ou bien par technique sol-gel ou par pulvérisation lorsque la pile a une structure planaire.

Le dépôt de la céramique conductrice de protons (couche (c)) peut se fait par sérigraphie, par voie sol-gel ou par dépôt en phase vapeur.

Enfin, le dépôt de la cathode (couche (d)) peut se faire par sérigraphie ou dépôt chimique en phase vapeur (CVD).

Chacune de ces couches doit, après dépôt, subir une étape de compactage par frittage à haute température. Cette étape de frittage est mise en oeuvre de préférence à une température au moins égale à 1300 °C et de préférence inférieure à 1400 °C. Cette limite supérieure est déterminée par la limite de stabilité de la membrane céramique de purification d'hydrogène.

Le procédé de la présente invention comprend par conséquent de préférence au moins une étape, de préférence au moins deux ou trois étapes de frittage à une température supérieure à 1300 °C.

Enfin, la présente invention a en outre pour objet un procédé de production d'énergie électrique utilisant une pile à combustible selon l'invention. Ce procédé comprend de manière connue, l'alimentation de la pile, du côté de la membrane céramique de purification d'hydrogène, avec un gaz contenant de l'hydrogène et, du côté de la cathode, avec un gaz contenant de l'oxygène. Grâce à la sélectivité de la membrane céramique nanoporeuse vis-à-vis de l'hydrogène, il n'est pas nécessaire d'alimenter la pile avec de l'hydrogène de haute pureté et le combustible gazeux peut contenir une certaine fraction d'impuretés gazeuses, principalement du monoxyde de carbone et du dioxyde de carbone.

Lorsque l'électrolyte solide conducteur de protons est une céramique, c'est-à-dire lorsque la pile à combustible est une pile de type PCFC, la température de fonctionnement de la pile est avantageusement comprise entre 200 et 650 °C, en particulier entre 300 et 500 °C. Ces températures permettent un fonctionnement de la pile avec de bons rendements énergétiques, supérieurs à ceux des PEMFC, et pendant des durées nettement supérieures à celles des SOFC qui nécessitent des températures de fonctionnement supérieurs à 750 °C.

**Revendications**

1. Pile à combustible à électrolyte solide conducteur de protons, comprenant, un empilement des couches suivantes directement en contact les unes avec les autres :

   (a) une membrane céramique de purification d'hydrogène ($H_2$) comprenant un support poreux à porosité ouverte, à base de spinelle alumino-magnésique, imprégné d'une couche de xérogel nanoporeuse à base de silice,
   (b) une anode poreuse capable d'oxyder l'hydrogène ($H_2$),
   (c) un électrolyte solide, organique ou céramique, conducteur ionique, et
   (d) une cathode poreuse capable de réduire l'oxygène ($O_2$).

2. Pile à combustible selon la revendication 1, **caractérisée par le fait que** la membrane céramique (couche (a)) a une épaisseur comprise entre 100 $\mu$m et 500 $\mu$m, de préférence entre 200 $\mu$m et 300 $\mu$m.

3. Pile à combustible selon la revendication 1 ou 2, **caractérisé par le fait que** la membrane céramique (couche (a)) a une porosité ouverte avec un diamètre moyen des pores inférieur ou égal à 2 nm.

4. Pile à combustible selon l'une quelconque des revendications précédentes, **caractérisée par le fait que** l'électrolyte solide est un polymère organique porteur de groupes acides, en particulier de groupes acide sulfonique, ou un polymère organique imprégné d'une solution aqueuse d'acide.

5. Pile à combustible selon l'une quelconque des revendications 1 à 3, **caractérisée par le fait que** l'électrolyte solide est une céramique conductrice de protons, de préférence une céramique à base de pérovskite de formule $ABO_3$ où A = Ba ou Sr et B = Ce, Zr, éventuellement dopée à l'yttrium (Y) ou l'ytterbium (Yb).

6. Pile à combustible selon l'une quelconque des revendications précédentes, **caractérisée par le fait que** l'électrolyte solide est présent sous forme d'une couche ayant une épaisseur inférieure à 100 $\mu$m, de préférence comprise entre 8 et 80 $\mu$m, en particulier comprise entre 10 et 50 $\mu$m.

7. Pile à combustible selon l'une quelconque des revendications précédentes, **caractérisée par le fait qu'**elle a une structure planaire ou une structure tubulaire dans laquelle les différentes couches (a) à (d) sont des couches concentriques.

8. Pile à combustible selon la revendication 7, **caractérisée par le fait que**, dans la structure tubulaire formée par des couches concentriques (a) à (d), la membrane céramique de purification d'hydrogène (couche (a)) est la couche intérieure entourant la lumière du tube et la cathode (couche (d)) est la couche la plus externe.

9. Procédé de fabrication d'une pile à combustible selon l'une quelconque des revendications précédentes, comprenant le dépôt des couches (b) à (d) sur une membrane céramique de purification d'hydrogène ($H_2$) formée par un support poreux à porosité ouverte, à base de spinelle alumino-magnésique, imprégné d'une couche de xérogel nanoporeuse à base de silice.

10. Procédé de fabrication selon la revendication 9, **caractérisé par le fait que** l'électrolyte solide (couche (c)) est une céramique conductrice de protons et que le dépôt de cette couche se fait par sérigraphie, par voie sol-gel ou par dépôt en phase vapeur.

11. Procédé de fabrication selon l'une quelconque des revendications 9 à 10, **caractérisé par le fait que** le dépôt de l'anode (couche (b)) se fait par extrusion ou technique sol-gel en cas de structure tubulaire de la pile, ou par voie sol-gel ou pulvérisation en cas de structure planaire de la pile.

**12.** Procédé de fabrication selon l'une quelconque des revendications 9 à 11, **caractérisé par le fait que** le dépôt de la cathode (couche (d)) se fait par sérigraphie ou dépôt chimique en phase vapeur.

**13.** Procédé de fabrication selon l'une quelconque des revendications 9 à 12, **caractérisé par le fait qu'**il comprend au moins une étape de frittage à une température supérieure à 1300 °C.

**14.** Procédé de production d'énergie électrique, comprenant l'alimentation d'une pile à combustible selon l'une quelconque des revendications 1 à 8, par un gaz contenant de l'hydrogène du côté de la membrane céramique de purification d'hydrogène et par un gaz contenant de l'oxygène du côté de la cathode.

**15.** Procédé de production d'énergie électrique selon la revendication 14, **caractérisé par le fait que** l'électrolyte solide conducteur de protons est une céramique conductrice de protons et que la température de fonctionnement de la pile est comprise entre 200 et 650 °C, de préférence entre 300 et 500 °C.

**Claims**

**1.** Fuel cell having a proton-conducting solid electrolyte, comprising a stack of the following layers directly in contact with one another:

(a) a ceramic hydrogen ($H_2$) purification membrane comprising a porous support of open porosity which is based on aluminium-magnesium spinel and is impregnated with a nanoporous silica-based xerogel layer,
(b) a porous anode capable of oxidising hydrogen ($H_2$),
(c) a solid, organic or ceramic electrolyte which is an ion conductor, and
(d) a porous cathode capable of reducing oxygen ($O_2$).

**2.** Fuel cell according to claim 1, **characterised in that** the ceramic membrane (layer (a)) has a thickness of from 100 $\mu$m to 500 $\mu$m, preferably from 200 $\mu$m to 300 $\mu$m.

**3.** Fuel cell according to claim 1 or 2, **characterised in that** the ceramic membrane (layer (a)) has an open porosity with an average pore diameter of less than or equal to 2 nm.

**4.** Fuel cell according to any one of the preceding claims, **characterised in that** the solid electrolyte is an organic polymer carrying acid groups, in particular sulfonic acid groups, or an organic polymer impregnated with an aqueous acid solution.

**5.** Fuel cell according to any one of claims 1 to 3, **characterised in that** the solid electrolyte is a proton-conducting ceramic, preferably a ceramic based on perovskite of formula $ABO_3$ wherein A = Ba or Sr and B = Ce, Zr, optionally doped with yttrium (Y) or ytterbium (Yb).

**6.** Fuel cell according to any one of the preceding claims, **characterised in that** the solid electrolyte is in the form of a layer having a thickness of less than 100 $\mu$m, preferably from 8 to 80 $\mu$m, in particular from 10 to 50 $\mu$m.

**7.** Fuel cell according to any one of the preceding claims, **characterised in that** it has a planar structure or a tubular structure in which the different layers (a) to (d) are concentric layers.

**8.** Fuel cell according to claim 7, **characterised in that**, in the tubular structure formed by concentric layers (a) to (d), the ceramic hydrogen purification membrane (layer (a)) is the inner layer surrounding the tube cavity and the cathode (layer (d)) is the outermost layer.

**9.** Process for the production of a fuel cell according to any one of the preceding claims, comprising the deposition of layers (b) to (d) on a ceramic hydrogen ($H_2$) purification membrane formed by a porous support with open porosity which is based on aluminium-magnesium spinel and is impregnated with a nanoporous silica-based xerogel layer.

**10.** Production process according to claim 9, **characterised in that** the solid electrolyte (layer (c)) is a proton-conducting ceramic and **in that** the deposition of that layer is carried out by screen printing, by the sol-gel method or by vapour phase deposition.

**11.** Production process according to either claim 9 or claim 10, **characterised in that** the deposition of the anode (layer (b)) is carried out by extrusion or the sol-gel technique in the case of a tubular structure of the cell, or by the sol-gel method or spraying in the case of a planar structure of the cell.

**12.** Production process according to any one of claims 9 to 11, **characterised in that** the deposition of the cathode (layer (d)) is carried out by screen printing or chemical vapour phase deposition.

**13.** Production process according to any one of claims 9 to 12, **characterised in that** it comprises at least one step of sintering at a temperature greater than 1300°C.

14. Process for the production of electrical energy, comprising supplying a fuel cell according to any one of claims 1 to 8 with a hydrogen-containing gas on the ceramic hydrogen purification membrane side and with an oxygen-containing gas on the cathode side.

15. Process for the production of electrical energy according to claim 14, **characterised in that** the solid proton-conducting electrolyte is a proton-conducting ceramic and **in that** the operating temperature of the cell is from 200 to 650°C, preferably from 300 to 500°C.


**Patentansprüche**

1. Brennstoffzelle mit einem festen protonenleitenden Elektrolyten, umfassend einen Brennstoffzellen-Stapel aufeinanderfolgender Schichten, die jeweils miteinander direkt in Kontakt stehen:

    (a) eine keramische Membran zur Reinigung von Wasserstoff (H$_2$), die einen porösen Träger mit offener Porosität auf der Basis von Aluminium-Magnesium-Spinell umfasst, der mit einer nanoporösen Xerogel-Schicht auf der Basis von Siliziumdioxid imprägniert ist,
    (b) eine poröse Anode, die in der Lage ist, Wasserstoff (H$_2$) zu oxidieren,
    (c) einen festen organischen oder keramischen ionenleitenden Elektrolyten, und
    (d) eine poröse Kathode, die in der Lage ist, Sauerstoff (O$_2$) zu reduzieren.

2. Brennstoffzelle gemäß Anspruch 1, **dadurch gekennzeichnet, dass** die keramische Membran (Schicht (a)) eine Dicke zwischen 100 μm und 500 μm, vorzugsweise zwischen 200 μm und 300 μm aufweist.

3. Brennstoffzelle gemäß Anspruch 1 oder 2, **dadurch gekennzeichnet, dass** die keramische Membran (Schicht (a)) eine offene Porosität mit einem mittleren Porendurchmesser von kleiner oder gleich 2 nm aufweist.

4. Brennstoffzelle gemäß einem der vorhergehenden Ansprüche, **dadurch gekennzeichnet, dass** der feste Elektrolyt ein organisches, acidische Gruppen, insbesondere Sulfonsäuregruppcn, tragendes Polymer ist oder ein organisches Polymer, das mit einer wässrigen Lösung einer Säure imprägniert ist.

5. Brennstoffzelle gemäß einem der Ansprüche 1 bis 3, **dadurch gekennzeichnet, dass** der feste Elektrolyt eine protonenleitende Keramik ist, vorzugsweise eine Keramik auf Basis von Perowskit der Formel ABO$_3$, wobei A = Ba oder Sr und B = Ce, Zr, gegebenenfalls mit Yttrium (Y) oder Ytterbium (Yb) stabilisiert.

6. Brennstoffzelle gemäß einem der vorhergehenden Ansprüche, **dadurch gekennzeichnet, dass** der feste Elektrolyt in Form einer Schicht vorliegt, die eine Dicke von kleiner als 100 μm, vorzugsweise zwischen 8 und 80 μm, insbesondere zwischen 10 und 50 μm aufweist.

7. Brennstoffzelle gemäß einem der vorhergehenden Ansprüche, **dadurch gekennzeichnet, dass** sie eine planare Struktur oder eine röhrenförmige Struktur aufweist, in welcher die unterschiedlichen Schichten (a) bis (d) konzentrische Schichten sind.

8. Brennstoffzelle gemäß Anspruch 7, **dadurch gekennzeichnet, dass** in der röhrenförmigen Struktur, die durch konzentrische Schichten (a) bis (d) gebildet wird, die keramische Membran zur Reinigung von Wasserstoff (Schicht (a)) die innerste Schicht ist, die den Kanal der Röhre umgibt, und die Kathode (Schicht (d)) die äußerste Schicht ist.

9. Verfahren zur Herstellung einer Brennstoffzelle gemäß einem der vorhergehenden Ansprüche, umfassend die Ablagerung von Schichten (b) bis (d) auf einer keramischen Membran zur Reinigung von Wasserstoff (H$_2$), die durch einen porösen Träger mit offener Porosität auf der Basis von Aluminium-Magnesium-Spinell gebildet wird, der mit einer nanoporösen Xerogel-Schicht auf der Basis von Siliziumdioxid imprägniert ist.

10. Verfahren zur Herstellung gemäß Anspruch 9, **dadurch gekennzeichnet, dass** der feste Elektrolyt (Schicht (c)) eine protonenleitende Keramik ist und dass die Ablagerung dieser Schicht durch Siebdruck, durch einen Sol-Gel-Prozess oder durch Dampfabscheidung erfolgt.

11. Verfahren zur Herstellung gemäß einem der Ansprüche 9 bis 10, **dadurch gekennzeichnet, dass** die Abscheidung der Anode (Schicht (b)) im Fall einer röhrenförmigen Struktur der Zelle durch Extrusion oder Sol-Gel-Technik oder im Fall einer planaren Struktur der Zelle durch einen Sol-Gel-Prozess oder durch Zerstäuben erfolgt.

12. Verfahren zur Herstellung gemäß einem der Ansprüche 9 bis 11, **dadurch gekennzeichnet, dass** die Abscheidung der Kathode (Schicht (d)) durch Siebdruck oder durch chemische Dampfabscheidung erfolgt.

**13.** Verfahren zur Herstellung gemäß einem der Ansprüche 9 bis 12, **dadurch gekennzeichnet, dass** es mindestens einen Sinterungsschritt bei einer Temperatur von oberhalb 1300 °C umfasst.

**14.** Verfahren zur Produktion elektrischer Energie, umfassend die Versorgung einer Brennstoffzelle gemäß einem der Ansprüche 1 bis 8 mit einem Wasserstoff enthaltenden Gas auf der Seite der keramischen Membran zur Reinigung von Wasserstoff und durch ein Sauerstoff enthaltendes Gas auf der Seite der Kathode.

**15.** Verfahren zur Produktion von elektrischer Energie gemäß Anspruch 14, **dadurch gekennzeichnet, dass** der protonenleitende feste Elektrolyt eine protonenleitende Keramik ist und dass die Betriebstemperatur der Zelle zwischen 200 und 650 °C, vorzugsweise zwischen 300 und 500 °C, liegt.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2006067156 A

**Littérature non-brevet citée dans la description**

- **L. Blum ; W.A. Meulenberg ; H. Nabielek ; R. Steinberger-Wilckens.** *Int. J. Appl. Ceram. Technol.,* 2005, vol. 2 (6), 482-492